Europäisches Patentamt

European Patent Office

Office européen des brevets

(11) Veröffentlichungsnummer: **0 235 721**
**B1**

(12) **EUROPÄISCHE PATENTSCHRIFT**

(45) Veröffentlichungstag der Patentschrift:
**13.12.89**

(21) Anmeldenummer: **87102553.2**

(22) Anmeldetag: **24.02.87**

(51) Int. Cl.⁴: **B23K 11/06**

(54) Verfahren und Vorrichtung zum Herstellen von Schweissnähten mit Hilfe einer Rollnaht-Schweissmaschine.

(30) Priorität: **06.03.86 DE 3607394**

(43) Veröffentlichungstag der Anmeldung:
**09.09.87 Patentblatt 87/37**

(45) Bekanntmachung des Hinweises auf die Patenterteilung:
**13.12.89 Patentblatt 89/50**

(84) Benannte Vertragsstaaten:
**ES FR GB IT SE**

(56) Entgegenhaltungen:
**DE-C- 1 124 616**

**PATENT ABSTRACTS OF JAPAN, Band 8,
Nr. 274 (M-345)[1711], 14. Dezember 1984**

(73) Patentinhaber: **Bayerische Motoren Werke
Aktiengesellschaft, Patentabteilung
AJ-3 Postfach 40 02 40 Petuelring 130,
D-8000 München 40(DE)**

(72) Erfinder: **König, Dieter, Dr., Gallenreuther Strasse 16,
D-8000 München 60(DE)**
Erfinder: **Rüger, Alfred, Bodenseestrasse 289,
D-8000 München 60(DE)**
Erfinder: **Schmidt, Günter, Vogesenstrasse 50,
D-8000 München 82(DE)**

(74) Vertreter: **Schweiger, Erwin, c/o Bayerische Motoren
Werke AG - AJ-35 Postfach 40 02 40 Petuelring 130,
D-8000 München 40(DE)**

**Beschreibung**

Die Erfindung bezieht sich auf ein Verfahren der im Oberbegriff des ersten Anspruchs angegebenen Gattung sowie auf eine Vorrichtung zur Durchführung des Verfahrens nach dem Oberbegriff des Anspruchs 6.

Aus der DE-C 11 24 616 ist eine Rollnaht-Schweißmaschine bekannt, mit der Böden bzw. Deckel von Fässern geschweißt werden können. Hierzu sind die beiden Achsen der Rollenelektroden schräg zueinander versetzt, so daß sie sich kreuzen. Die beiden Rollenelektroden selbst sind jedoch identisch aufgebaut.

Bei der Herstellung von Automobilkarosserien werden eine Vielzahl von Schweißnähten verwendet mit unterschiedlichen Konfigurationen. Bisher hat man praktisch alle Schweißnähte mit Schweißzangen oder Pickern hergestellt, Mußten diese Schweißnähte flüssigkeitsdicht sein, so ist man dazu übergegangen, in die Schweißnaht noch ein Dichtungsband einzulegen. Nachteilig bei dieser Vorgehensweise ist, daß zum einen ein Dichtungsband benötigt wird, welches manuell eingelegt werden muß und daß beim Schweißen mit Schweißzangen optisch unschöne Schweißlinsen entstehen, die das Gesamtbild beeinträchtigen.

Um das Gesamtbild und auch das Einlegen eines Dichtungsbandes zu vermeiden, ist es bereits bekannt, beispielsweise Regenrinnen oder A-/C-Säulen bei Kraftfahrzeugkarosserien mittels Rollnaht Schweißmaschinen zu verschweißen. Hierbei wurden jedoch die Schweißmaschinen von Hand bedient. Eine Automatisierung dieses Vorganges war aufgrund der Schweißnahtform praktisch unmöglich. Darüber hinaus konnten auch nur solche Schweißnahtformen bearbeitet werden, die mit geometrisch einfachen Rollenelektroden erreichbar waren. Nur diese Elektroden bildeten die Gewähr für eine ausreichend hohe Standzeit und ein sauberes Schweißnahtbild.

Aufgabe der vorliegenden Erfindung ist es, räumlich kompliziert geformte (hinterschnittene) und verlaufende Schweißnähte mit Rollenelektroden zu schweißen.

Diese Aufgabe wird erfindungsgemäß durch die Kombination der Merkmale des ersten Anspruchs gelöst. Denn erst dadurch war es möglich, selbst kompliziert geformte Schweißnähte, die leichte Hinterschneidungen aufweisen, mit unterschiedlich ausgestalteten Elektroden zu schweißen. Die ständige Kühlung der Schweißnaht in dem gerade gefertigten und noch zu fertigenden Bereich sowie die ständige Besäumung der Elektroden gewährleistet ein praktisch verzugsfreies Schweißen mit sauberem Schweißnahtbild. Damit können nunmehr kompliziert geformte Schweißnähte absolut dicht und ohne Hinzufügen eines Dichtungsbandes und in ausreichender optischer Güte hergestellt werden. Darüber hinaus wird dadurch die Festigkeit der gesamten Schweißkonstruktion gegenüber dem vorherigen Punktschweißen wesentlich verbessert.

Die Weiterbildung nach Anspruch 2 hat den Vorteil, daß beide zu verschweißenden Bleche gleichmäßig gekühlt werden, so daß kein störender Verzug mehr auftritt.

Die Weiterbildung nach Anspruch 3 hat den Vorteil, daß die Schweiß naht - unabhängig von der augenblicklichen Stellung der Rollnahtzange - immer gekühlt wird. Darüber hinaus vereinfacht dieser Vorschlag den gerätetechnischen Aufwand erheblich.

Je nach verwendeten Blechen ist die Weiterbildung nach Anspruch 4 bis 5 sinnvoll. Hierdurch wird vermieden, daß die der Schweißstelle in Schweißrichtung vorlaufende Wärme einen Verzug der noch nicht verschweißten Bleche bewirkt. Das Nachkühlen hat darüber hinaus den Vorteil, daß beim Verlassen der Schweißstation die Schweißstelle soweit abgekühlt ist, daß bei weiteren Schweißvorgängen unter Einbeziehung des gerade geschweißten Bleches kein Verzug mehr auftreten kann und damit auch keine Eigenspannungen entstehen.

Anspruch 6 beschreibt eine zur Durchführung des erfindungsgemäsen Verfahrens geeignete Vorrichtung. Hierbei wird unter Kegelwinkel der Elektroden der Winkel verstanden, der gebildet wird zwischen der Elektrodenlängsachse (Rotationsachse) und der Tangente in der Berührfläche der Elektrode mit dem zu verschweißenden Blech. Es sind zwar bereits keglig geformte oder ballig ausgebildete Rollenelektroden bekannt, jedoch wurden diese immer nur paarweise verwendet, und nie- wie erfindungsgemäß vorgeschlagen - in Kombination mit einer anders ausgebildeten Elektrode. Dies wurde immer deshalb für unmöglich gehalten, da hierunter das Schweißbild und die Elektrodenstandzeit gelitten hätte, so daß eine wirtschaftliche Herstellung derartiger Schweißnähte und Verwendung derartiger Elektroden unmöglich war. Durch die erfindungsgemäße Kombination ist es jedoch gelungen, diese Nachteile zu vermeiden und bei einem guten Schweißnahtbild eine hohe Elektrodenstandzeit zu erreichen.

Die Weiterbildungen nach den Ansprüchen 7 und 8 beschreiben vorteilhafte Ausführungen der Kühlmittelleitung.

Um derartige Schweißnähte möglichst schnell und rationell bei gleichbleibender Qualität herzustellen, ist es sinnvoll, die Rollnahtzange automatisch die Schweißnaht abfahren zu lassen. Hierzu ist die Weiterbildung nach einem der Ansprüchen 9 bis 16 - je nach Anzahl der benötigten Freiheitsgrade - sinnvoll. Dadurch wird eine Schlittenführung für die Rollnahtzange bereitgestellt, die - je nach Erfordernissen - auch dreidimensional verlaufende Schweiß nähte sicher herstellen läßt. Auch werden dadurch sicher Führungstoleranzen, die zu Ungenauigkeiten führen, vermieden.

Im folgenden wird die Erfindung anhand eines ausgewählten Beispiels näher erläutert.

Es stellen dar:

Fig. 1a,b schematische Vorderansicht und Draufsicht auf eine erfindungsgemäß aufgebaute, automatisch arbeitende Schweißeinrichtung;

Fig. 2 eine Vorderansicht der erfindungsgemäs aufgebauten Schweißeinheit mit Schweißschlitten;

Fig. 3 eine Seitenansicht der Anordnung nach Fig. 2;

Fig. 4 eine Ausgestaltung der erfindungsgemäß aufgebauten Rollenelektroden.

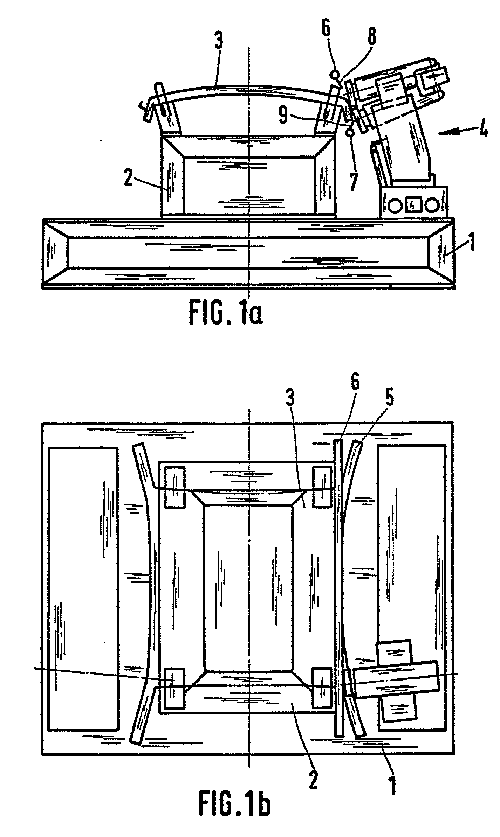

Fig. 1 zeigt schematisiert eine Anordnung zur Herstellung eines Daches eines Kraftfahrzeuges. Die hierbei vorhandenen seitlichen Regenrinnen werden von je einer Rollnahtschweißmaschine (in Fig. 1 nur die rechte dargestellt) hergestellt.

Hierzu weist die Anlage ein Gestell 1 auf, auf dem in einer Halterung 2 die zu verschweißenden Bleche 3 lagerichtig gehalten werden.

Jede Regenrinne und evtl. auch die A- und/oder C-Säule wird von je einer seitlich angeordneten Schweißeinheit 4 (in Fig. 1 nur die rechte dargestellt) hergestellt.

Jede Schweißeinheit 4 ist zu diesem Zweck längsverfahrbar auf dem Gestell 1 angeordnet.

Wie die Fig. 1a und b weiterhin noch zeigen, ist oberhalb und unterhalb der zu fertigenden Schweißnaht 5 je eine Kühlmittelleitung 6, 7 angeordnet. Diese Kühlmittelleitung 6, 7 ist ortsfest angeordnet und weist eine Vielzahl von Austrittsöffnungen 8, 9 auf, die in Richtung auf die zu fertigende Schweißnaht 5 gerichtet sind.

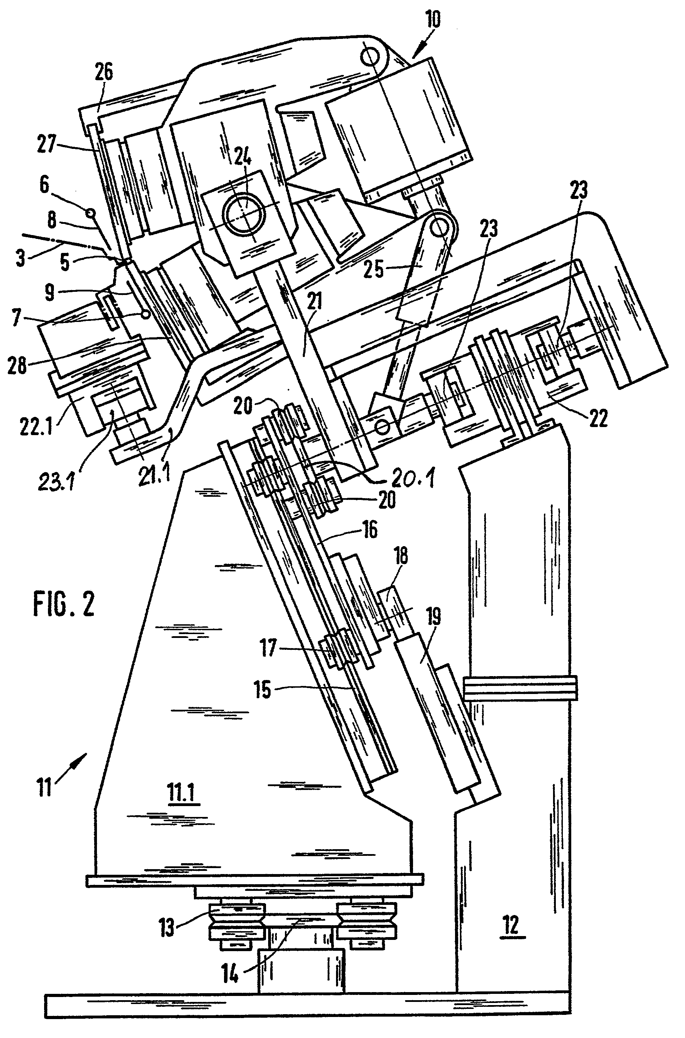

In Fig. 2 ist die Anordnung der Schweißeinheit 4 sowie ihr Aufbau deutlicher zu erkennen. Sie besteht im wesentlichen aus einer handelsüblich aufgebauten Rollnahtzange 10 und einer sie tragenden Schlitteneinheit 11.

Die Schlitteneinheit 11 wird vorzugsweise in einem Rahmen 12, der mit dem Gestell 1 fest verbunden ist, geführt. Hierzu weist die Schlitteneinheit 11 einen Grundschlitten 11.1 auf, der über Führungsrollen 13 mit einer am Rahmen 12 angeordneten Führungsleiste 14 zusammenwirkt. Dies trägt die gesamte Schlitteneinheit 11 und hat die Aufgabe, diese entlang der zu fertigenden Schweißnaht 5 verfahren zu lassen. Hierzu kann sie eben oder auch in ihrer Längsebene gewölbt ausgebildet sein.

Auf dem Grundschlitten 11.1 ist eine weitere Führungsleiste 15 angebracht. Sie verläuft nahezu senkrecht zur Führungsleiste 14 und trägt den eigentlichen Schweißschlitten 16. Hierzu weist der Schweißschlitten 16 Führungsrollen 17, die mit der Führungsleiste 15 zusammenwirken, sowie eine Abstützrolle 18 auf. Diese Abstützrolle 18 wird von einem Höhenlineal 19 geführt, welches ortsfest im Rahmen 12 angeordnet ist.

Damit die Rollnahtzange 10 zusätzlich Drehbewegungen ausführen kann, weist der Schweißschlitten weitere Führungsrollen 20 auf, die mit Führungsleisten 20.1, senkrecht zur Führungsleiste angeordnet, zusammenwirken.

Die Führungsleiste 20.1 ist Teil eines die Rollnahtzange 10 tragenden Haltebügels 21. An dem der Führungsrolle 20 abgewandten Seite ist der Haltebügel 21 zum Vermeiden von Radialspiel in zwei Führungskulissen 22, die im Rahmen 12 ortsfest angeordnet sind, mit Hilfe der Führungsrollen 23 zusätzlich gelagert. Diese können auch mit Axialanschlägen ausgerüstet sein, um Axialspiel, das in den Führungsrollen 20 bzw. zwischen diesen und den Führungsleisten 20.1 auftritt, zu verhindern. Eine andere Möglichkeit hierfür zeigt Fig. 2, indem an den Haltebügel 21 ein weiterer Arm 21.1 vorgesehen ist, der über eine Führungsrolle 23.1 in einer Führungskulisse 22.1 geführt ist. Die Führungskulisse 22.1 ist in einer zur Ebene der Führungskulisse 22 senkrechten Ebene angeordnet.

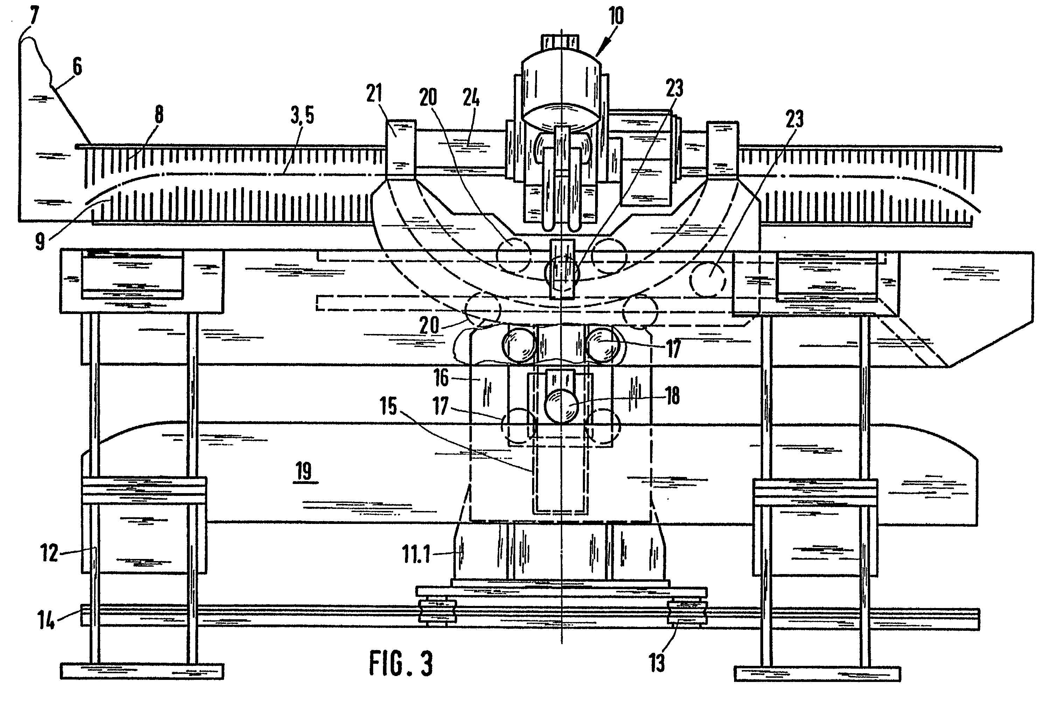

Die Führungsfläche des Höhenlineals 19 sowie die der Führungskulissen 22 sind führungsmäßig identisch aufgebaut. Dies läßt sich am besten in Fig. 3 erkennen. Weiterhin sind hier die Anordnung und Lage der einzelnen vorher beschriebenen Führungen zueinander deutlich sichtbar. Zusätzlich ist in Fig. 3 die Lage der Kühlmittelleitungen 6 und 7 sowie die Ausbildung ihrer Austrittsöffnungen 8 und 9 dargestellt.

Die an sich übliche Rollnahtzange 10 ist bei 24 verschwenkbar in dem Haltebügel 21 gelagert. Die Verschwenkbewegung wird durch den Ausgleichszylinder 25 gesteuert. Dadurch kann die Rollnahtzange auf den jeweiligen Schweißnahtbeginn eingestellt werden, der lagemäßig unabhängig vom Schweißnahtende sein kann.

Weiterhin ist in der Fig. 2 die Anordnung der Messer 26 zum Besäumen der Rollenelektroden 27 und 28 gezeigt. Die Messer 26 befinden sich im ständigen Kontakt mit den Umfangsflächen der Rollenelektroden 27, 28. Dadurch stellen sie sicher, daß die Breite der Kontaktflächen der Rollenelektroden konstant bleibt. Eine Wulstbildung aufgrund der Erwärmung der Rollenelektroden und des Schweißdruckes wird damit ausgeschlossen.

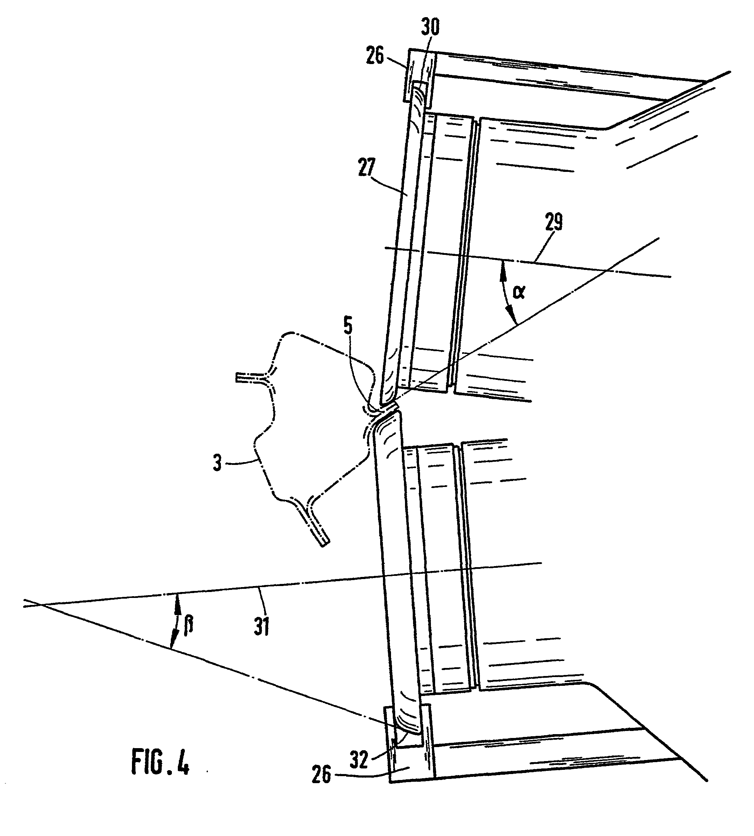

In Fig. 4 ist schematisch die Schweißstelle dargestellt. Ebenso ist hieraus der Aufbau der Rollenelektroden 27, 28 ersichtlich. Aufgrund der Nahtform der zu fertigenden Schweißnaht 5 können keine gleich aufgebauten Rollenelektroden verwendet werden. Die Rollenelektrode 27 weist einen Kegelwinkel $\alpha$ auf, der unterschiedlich zum Kegelwinkel $\beta$ der Rollenelektrode 28 ist. Unter Kegelwinkel wird der Winkel verstanden, der zwischen der Drehachse 29, 31 der Elektrode 27, 28 und ihrer mit den zu verschweißenden Blechen in Kontakt gelangende Umfangsfläche 30, 32 gebildet wird. Weiterhin kreuzen sich die Achsen 29, 31 der Rollenelektroden 27, 28. Derart ungleich aufgebaute Elektroden können nur deshalb ein befriedigendes Schweißbild und eine wirtschaftliche Standzeit errei. chen, weil sie an ihrem Umfang ständig durch die Messer 26 besäumt werden und weil aufgrund der Kühlmittelleitung 6 und 7 die Schweißstelle ständig gekühlt wird. Dadurch wird sowohl der Verzug der zu schweißenden Bleche als auch die Wärmeeinwirkung in die Elektroden verringert.

Die erfindungsgemäß aufgebaute Vorrichtung arbeitet folgendermaßen: Die Schlitteneinheit 11 wird zum Beginn der Schweißnaht gefahren. Aufgrund des Höhenlineals 19 und der Führungskulisse 22 ist die Rollnahtzange 10 bereits in einer auf dem Beginn der Schweißnaht abgestimmten Höhe eingestellt. Das Einfahren der Rollenelektroden 27, 28 in Schweißposition wird durch Aktivieren des Ausgleichszylinders 25 erreicht. Nach Schweißbeginn wird dieser Ausgleichszylinder 25 drucklos geschaltet. Die Schweißkraft selbst wird durch einen Arbeitszylinder an der Rollnahtzange selbst aufgebracht, wie an sich bekannt.

Je nach Kontur des Höhenlineals 19 sowie der Führungskulissen 22 wird nun bei einer Längsbewegung des Grundschlittens 11 der Schweißschlitten 12 in der Führung 15 verfahren. Gleichzeitig kann sich die Rollnahtzange 10 mit dem Haltebügel 21 in den Führungsrollen 20 aufgrund der Ausbildung der Führungskulisse 22 drehen, so daß sich Übergänge, z. B. von der Regenrinne zu der A- und/oder C-Säule, ebenfalls kontinuierlich herstellen lassen.

Dreidimensional geformte Schweißnähte lassen sich dadurch erzielen, daß zusätzlich der Grundschlitten 11 über eine gewölbte bzw. gebogene Führungsleiste 14 verfahren wird. Selbstverständlich sind hier - wie auch bereits bei der weiter oben beschriebenen Arbetisweise - alle Führungsleisten/-kulissen derart aufeinander abgestimmt, daß die gewünschte Schweißnaht sicher und spielfrei erzeugt werden kann.

**Patentansprüche**

1. Verfahren zum Herstellen von Schweißnähten (5) mit Hilfe von Rollnaht-Schweißmaschinen (4), bei dem sich die Rollenelektrodenachsen (29, 31) unter einem Winkel kreuzen, dadurch gekennzeichnet, daß die Rollenelektroden (27, 28) unterschiedlich gestaltete Kontaktflächen aufweisen, daß die gerade gefertigte und daran anschließende noch zu fertigende Schweißnaht (5) während des Schweißvorganges gekühlt wird und daß die Rollenelektroden (27, 28) während des Schweißvorganges an ihrer Kontaktfläche ständig besäumt werden.

2. Verfahren nach Anspruch 1, dadurch gekennzeichnet, daß beidseitig der zu fertigenden Schweißnaht (5) gekühlt wird.

3. Verfahren nach Anspruch 1 oder 2, dadurach gekennzeichnet, daß die gesamte zu fertigende und bereits gefertigte Schweißnaht (5) gekühlt wird.

4. Verfahren nach einem der vorangegangenen Ansprüche, dadurch gekennzeichnet, daß mit der Kühlung vor Beginn der Schweißung begonnen wird.

5. Verfahren nach einem der vorangegangenen Ansprüche, dadurch gekennzeichnet, daß nach Beendigung des Schweißvorganges weiter gekühlt wird.

6. Vorrichtung zur Durchführung des Verfahrens, bestehend aus einer Rollnahtzange (10) mit zwei drehbar antreibbar gelagerten Rollenelektroden (27, 28), deren Achsen sich kreuzen und von denen mindestens eine verschwenkbar angeordnet ist, dadurch gekennzeichnet, daß die Rollenelektroden (27,28) unterschiedliche Kegelwinkel ($\alpha,\beta$) auf-weisen, daß in Schweißrichtung vor und hinter den Rollenelektroden (27,28) Kühlmittelleitungen (6,7) vorgesehen sind, die in Richtung auf die zu fertigende bzw. gefertigte Schweißnaht (5) gerichtete Austrittsöffnungen (8,9) aufweisen, und daß jede Rollenelektrode (27,28) an ihrem Umfang besäumende Messer (26) aufweist.

7. Vorrichtung nach Anspruch 6, dadurch gekennzeichnet, daß die Kühlmittelleitung (6,7) sich über die gesamte Länge der Schweißnaht (5) erstreckt und ortsfest angeordnet sind.

8. Vorrichtung nach einem der vorangegangenen Ansprüche, dadurch gekennzeichnet, daß ober- und unterhalb der Schweißnaht (5) je eine Kühlmittelleitung (6,7) vorgesehen ist.

9. Vorrichtung nach einem der vorangegangenen Ansprüche, dadurch gekennzeichnet, daß die Rollenelektroden (27,28) mit der Rollnahtzange (10) auf einem Schweißschlitten (16) angeordnet sind, der wiederum verfahrbar auf einem Grundschlitten (11) gelagert ist.

10. Vorrichtung nach einem der vorangegangenen Ansprüche, dadurch gekennzeichnet, daß der Schweißschlitten (16) in einer am Grundschlitten (11) angeordneten Längsführung (15) gelagert ist und über ein Höhenlineal (19) höhenverstellbar verfahrbar ist.

11. Vorrichtung nach einem der vorangegangenen Ansprüche, dadurch gekennzeichnet, daß der Grundschlitten (11) eine gestellfeste Längsführung (14) aufweist, deren Länge die der zu fertigenden Schweißnaht (5) entspricht.

12. Vorrichtung nach einem der vorangegangenen Ansprüche, dadurch gekennzeichnet, daß die Längsführung (14) des Grundschlittens (11) in einer Ebene liegt, die nahezu senkrecht zu der Ebene steht, die die Längsführung (15) des Schweißschlittens (16) enthält.

13. Vorrichtung nach einem der vorangegangenen Ansprüche, dadurch gekennzeichnet, daß der Schweißschlitten (16) eine weitere Führung (20.1) aufweist, in der die Rollnahtzange (10) in der Ebene der Längsführung (15) des Schweißschlittens (16) in und entgegen der Schweißrichtung schwenkbar ist.

14. Vorrichtung nach einem der vorangegangenen Ansprüche, dadurch gekennzeichnet, daß die Rollnahtzange (10) in einer Stützeinrichtung (Haltebügel 21) verschwenkbar in Richtung auf die zu fertigende Schweißnaht (5) gelagert ist.

15. Vorrichtung nach einem der vorangegangenen Ansprüche, dadurch gekennzeichnet, daß die Stützeinrichtung (21) zusätzlich in einer Führungskulisse (22) gelagert ist, deren Kontur der des Höhenlineals (19) entspricht.

16. Vorrichtung nach einem der vorangegangenen Ansprüche, dadurch gekennzeichnet, daß die Stützeinrichtung (21) zum Axialspielausgleich weiterhin in einer Führungskulisse (22.1) gelagert ist.

**Claims**

1. A method of producing welds (5) by using a seamwelding machine (4) in which the electrode-wheel axes (29, 31) intersect at an angle, characterised in that the electrode wheels (27, 28) have differently-shaped contact surfaces, the weld which has just been made and the weld (5) which is next to be made are cooled during the welding process, and the contact surfaces of the electrode wheels (27, 28) are continuously trimmed during the welding process.

2. A method according to claim 1, characterised in that the weld (5) to be produced is cooled on both sides.

3. A method according to claim 1 or 2, characterised in that the entire weld (5) to be produced or already produced is cooled.

4. A method according to any of the preceding claims, characterised in that cooling begins before welding.

5. A method according to any of the preceding claims, characterised in that cooling is continued at the end of the welding process.

6. Means for working the method, comprising a seamwelding gripper (10) with two electrode wheels (27, 28) mounted for driving in rotation, the wheel axes intersecting and at least one wheel being pivotably mounted, characterised in that the electrode wheels (27, 28) have different cone angles (α, β), coolant lines (6, 7) are provided before and behind the electrode wheels (27, 28) in the welding direction and have outlet openings (8, 9) extending towards the weld (5) to be produced or already produced , and each electrode wheel (27, 28) has trimming knives (26) at its periphery.

7. Means according to claim 6, characterised in that the coolant line (6, 7) extends over the entire length of the weld (5) and is mounted in a stationary position.

8. Means according to any of the preceding claims, characterised in that a coolant line (6, 7) is disposed above and below the seam (5) respectively.

9. Means according to any of the preceding claims, characterised in that the electrode wheels (27, 28) and the seam-welding gripper (10) are disposed on a welding slide (16) which, in turn, in mounted for travelling on a base slide (11).

10. Means according to any of the preceding claims, characterised in that the welding slide (16) is mounted in a longitudinal guide (15) disposed on the base slide (11) and is vertically adjustable via a height arm (19).

11. Means according to any of the preceding claims, characterised in that the base slide (11) has a longitudinal guide (14) secured to the stand and equal in length to the weld (5) to be produced.

12. Means according to any of the preceding claims, characterised in that the longitudinal guide (14) of the base slide (11) lies in a plane which is approximately at right angles to the plane containing the longitudinal guide (15) of the welding slide (16).

13. Means according to any of the preceding claims, characterised in that the welding slide (16) has another guide (20.1) in which the seam-welding gripper (10) is pivotable in the plane of the longitudinal guide (15) of the welding slide (16), in and against the direction of welding.

14. Means according to any of the preceding claims, characterised in that the seam-welding gripper (10) is mounted in a supporting device (stirrup 21) so as to be pivotable in the direction of the weld (5) to be produced.

15. Means according to any of the preceding claims, characterised in that the supporting device (21) is additionally mounted in a guide link (22) having a contour corresponding to that of the height arm (19).

16. Means according to any of the preceding claims, characterised in that the support device (21) is also mounted in a guide link (22.1) for compensating the axial clearance.

**Revendications**

1. Procédé de fabrication de cordons de soudure (5) à l'aide d'une machine de soudage en ligne continue par molettes (4), dans laquelle les axes des électrodes à rouleaux (29, 31) se croisent en formant un certain angle, caractérisé en ce que les électrodes à rouleaux (27, 28) présentent des surfaces de contact de formes différentes, que le cordon de soudure (5) venant d'être achevé et étant encore relié à celui qui doit être fabriqué est refroidi durant le processus de soudure, et que les électrodes à rouleaux (27, 28) sont constamment râclées sur leur surface de contact durant le processus de soudure.

2. Procédé selon la revendication 1, caractérisé par un refroidissement opéré des deux côtés du cordon de soudure (5) à fabriquer.

3. Procédé selon la revendication 1 ou 2, caractérisé en ce que le cordon de soudure (5) entier à fabriquer ou déjà fabriqué est refroidi.

4. Procédé selon l'une des revendications suivantes, caractérisé en ce que le refroidissement est commencé avant le début du soudage.

5. Procédé selon l'une des revendications précédentes, caractérisé en ce qu'on continue à refroidir après l'achèvement du processus de soudure.

6. Dispositif d'exécution du procédé, se composant d'une pince de soudage (10), avec deux électrodes à rouleaux (27, 28) montées tournantes et susceptibles d'être entraînées, dont les axes se croisent, et dont au moins l'une est disposée pivotante, caractérisé en ce que les électrodes à rouleaux (27, 28) présentent des angles de cônes (α, β) différents, en ce que des conduites de milieu de refroidissement (6, 7) sont prévues dans la direction de la soudure, devant et derrière les électrodes à rouleaux (27, 28), conduites qui présentent des orifices de sortie (8, 9) orientés dans la direction du cordon de soudure à fabriquer ou fabriqué, et en ce que chaque électrode à rouleau (27, 28) présente à sa périphérie un couteau de cisaillement (26).

7. Dispositif selon la revendication 6, caractérisé en ce que la conduite de milieu de refroidissement (6, 7) s'étend sur la longueur totale du cordon de soudure (5), et qu'elle est disposée de manière fixe.

8. Dispositif selon l'une des revendications précédentes, caractérisé en ce qu'au-dessus et au-dessous du cordon de soudure (5), il est prévu chaque fois une conduite de milieu de refroidissement (6, 7).

9. Dispositif selon l'une des revendications précédentes, caractérisé en ce que les électrodes à rouleaux (27, 28) sont disposées avec la pince à cordon de soudure (10) sur un chariot de soudage (16), lequel est monté de nouveau de manière susceptible d'être déplacé sur un chariot de base (11).

10. Dispositif selon l'une des revendications précédentes, caractérisé en ce que le chariot de soudage (16) est monté dans un guidage longitudinal (15) disposé sur le chariot de base (11), et qu'il est mobile de manière réglable en hauteur par l'intermédiaire d'une règle de hauteur (19).

11. Dispositif selon l'une des revendications précédentes, caractérisé en ce que le chariot de base (11) présente un guidage longitudinal (14) fixe sur le bâti, dont la longueur correspond au cordon de soudure (5) à fabriquer.

12. Dispositif selon l'une des revendications précédentes, caractérisé en ce que le guidage longitudinal (14) du chariot de base (11) est situé dans un plan qui est à peu près perpendiculaire au plan qui contient le guidage longitudinal (15) du chariot de soudage (16).

13. Dispositif selon l'une des revendications précédentes, caractérisé en ce que le chariot de soudage (16) présente un guidage (20.1) supplémentaire, dans lequel la pince à cordon de soudure (10) est pivotante dans le plan du guidage longitudinal (15) du chariot de soudage (16) et dans le sens opposé au soudage.

14. Dispositif selon l'une des revendications précédentes, caractérisé en ce que la pince à cordon de soudure (10) est pivotante dans un dispositif de soutien (étrier de maintien 21), en direction du cordon de soudure (5) à fabriquer.

15. Dispositif selon l'une des revendications précédentes, caractérisé en ce que le dispositif de soutien (21) est de plus monté dans une coulisse de guidage (22) dont le contour correspond à celui de la règle de hauteur (19).

16. Dispositif selon l'une des revendications précédentes, caractérisé en ce que le dispositif de soutien (21) est de plus monté dans une coulisse de guidage (21.1), dans le but d'une compensation du jeu axial.

FIG. 1a

FIG.1b

FIG. 2

FIG. 3

FIG.4